Europäisches Patentamt

European Patent Office

Office européen des brevets

(11) Veröffentlichungsnummer: **0 366 857 B1**

(12) **EUROPÄISCHE PATENTSCHRIFT**

(45) Veröffentlichungstag der Patentschrift: **02.12.92**

(51) Int. Cl.⁵: **B65G  47/22**, B65G 47/31, B65G 47/52

(21) Anmeldenummer: **89107421.3**

(22) Anmeldetag: **25.04.89**

(54) **Aufgabeförderer zum Aufgeben von Stückgutteilen auf einen Aufnahmeförderer.**

(30) Priorität: **01.10.88 DE 3833460**
**11.10.88 DE 3834483**

(43) Veröffentlichungstag der Anmeldung:
**09.05.90 Patentblatt  90/19**

(45) Bekanntmachung des Hinweises auf die
Patenterteilung:
**02.12.92 Patentblatt  92/49**

(84) Benannte Vertragsstaaten:
**CH DE FR GB IT LI NL**

(56) Entgegenhaltungen:
**CH-A- 554 793**
**GB-A- 2 142 600**

(73) Patentinhaber: **Bernhard Beumer Maschinenfabrik KG
Oelder Strasse 40
W-4720 Beckum(DE)**

(72) Erfinder: **Kneuper, Franz-Josef, Dipl.-Ing.
Westernkamp 18
W-4835 Rietberg 3(DE)**
Erfinder: **Lutterbeck, Werner, Ing. grad.
Ostlandstrasse 44
W-4720 Beckum(DE)**
Erfinder: **Wiesmann, Thomas, Dipl.-Ing.
Oststrasse 46
W-4720 Beckum(DE)**

(74) Vertreter: **Hoormann, Walter, Dr.-Ing. et al
FORRESTER & BOEHMERT Franz-
Joseph-Strasse 38
W-8000 München 40(DE)**

## Beschreibung

Die Erfindung betrifft einen Aufgabeförderer zum jeweils einzelnen Aufgeben von Stückgutteilen auf einen freien Förderplatz eines Aufnahmeförderers, insbesondere eines als Kippschalenförderer od.dgl. ausgebildeten sog. Sorters, dessen Förderrichtung unter einem spitzen Einschleuswinkel zur Förderrichtung des Aufgabeförderers verläuft, mit einer am abgabeseitigen Endabschnitt des Aufgabeförderers vorhandenen Beschleunigungsstrecke, längs welcher ein an einer den Anfang der Beschleunigungsstrecke bildenden Startlinie befindliches Stückgutteil jeweils auf eine vorgegebene Übergabegeschwindigkeit zu beschleunigen ist, wenn ein vom Aufnahmeförderer bzw. dessen Steuereinrichtung zu betätigender Startimpulsgeber bei Annäherung eines freien Förderplatzes des Aufnahmeförderers an die Übergabestelle einen Startimpuls für den Antritt des Aufgabeförderers ausgelöst hat, und mit einer der Beschleunigungsstrecke in Förderrichtung vorgeordneten Meßstrecke zum Positionieren des jeweiligen Stückgutteils an der Startlinie, wobei die sich quer über die Förderbahn des Aufgabeförderers erstreckende Anfangslinie der Meßstrecke unter Verwendung der Lichtschrankentechnologie od.dgl. ausgebildet ist und mit einer einen Rechner aufweisenden Steuereinrichtung verbunden ist.

Wenn vor- oder nachstehend von einem freien Förderplatz die Rede ist, so ist hierunter ein freier Förderabschnitt des Aufnahmeförderers zu verstehen, dessen Länge zur Aufnahme des jeweils aufzunehmenden Stückgutteils ausreicht. Handelt es sich um ein relativ kurzes Stückgutteil, so kann der betreffende Förderplatz des Aufnahmeförderers mithin kleiner sein als bei einem relativ langen Stückgutteil.

Handelt es sich bei dem Aufnahmeförderer um einen Kippschalenförderer od.dgl., so bedeutet der Begriff "freier Förderplatz" mithin eine freie Förderschale, wenn die Länge des aufzugebenden Stückgutteils kleiner als die Schalenlänge ist.

Ist bei einem derartigen Aufnahmeförderer die Stückgutlänge größer als eine Förderschale, jedoch kleiner als die Länge von zwei Förerschalen, so ist ein "freier Förderplatz" dann vorhanden, wenn sich der Übergabestelle zwei unmittelbar aufeinander folgende leere Kippschalen nähern, da in einem solchen Falle das aufzugebende Stückgutteil üblicherweise auf zwei Förderschalen plaziert wird. Ist dagegen die Länge eines Stückgutteils noch größer, so wird ein derartiges Stückgutteil mit Überlänge üblicherweise nicht auf den Aufnahmeförderer aufgegeben, sondern i.a. von Hand von dem Aufgabeförderer abgenommen und auf andere Weise seiner Zielstelle zugeführt, da es bei überlangen Stückgutteilen anderenfalls schon bei der Übergabe auf den Aufnahmeförderer zu Schwierigkeiten kommen kann.

Demgemäß ist es erforderlich, die Stückgutlänge bereits auf dem Aufgabeförderer insoweit zu bestimmen, und zwar nach drei Längenkategorien, die unabhängig von der konkreten Ausbildung des Aufnahmeförderers nachstehend der Einfachheit halber als Einschalenlänge bzw. Zweischalenlänge bzw. Überlänge bezeichnet werden,wobei mithin ein Stückgutteil Einschalenlänge aufweist, wenn seine Länge kleiner als ein systembedingter, vorgegebener Wert ist, der bei einem Kippschalenförderer im wesentlichen gleich der Länge einer Förderschale ist, und ein Stückgutteil Zweischalenlänge aufweist, wenn seine Länge größer als Einschalenlänge, jedoch kleiner als ein systembedingter Wert ist, der bei einem Kippschalenförderer im wesentlichen der doppelten Länge einer Förderschale entspricht, und wobei ein Stückgutteil Überlänge aufweist, wenn es länger als die Zweischalenlänge ist.

Für die erforderliche Längenbestimmung sind bekannte Aufgabeförderer i.a. mit einer aus mehreren einander in Förderrichtung nachgeordneten Lichtschranken od.dgl. als sich über seine Förderbahn erstreckende Meßlinien versehen, die jeweils ein Signal an die Steuereinrichtung abgeben, wenn sie von einem Stückgutteil durchsetzt bzw. wieder frei werden, wobei einer der Meßlinien zugleich dazu benutzt werden kann, um ein auf den Aufnahmeförderer aufzugebendes Stückgutteil an der Startlinie der der Meßstrecke nachgeordneten Beschleunigungsstrecke zu positionieren, wie dieses weiter unten noch beschrieben ist.

Es sei noch darauf verwiesen, daß die vorgegebene Übergabegeschwindigkeit höchst bevorzugt derart ist, daß ihre an der Übergabestelle in Förderrichtung des Aufnahmeförderers gerichtete Geschwindigkeitskomponente gleich der Fördergeschwindigkeit des Aufnahmeförderers ist, so daß ein Stückgutteil in Förderrichtung des Aufnahmeförderers ohne Schlupf auf diesen übergeben und demgemäß sehr genau plaziert werden kann, wie dieses in der DE-PS 29 09 292 beschrieben und für eine optimale Ausnutzung des Aufnahmeförderers und einen sicheren Betrieb höchst wünschenswert ist.

Bei dem in der DE-PS 29 09 292 beschriebenen Aufgabeförderer verläuft die den Anfang der Bescheunigungsstrecke bildende Startlinie rechtwinklig zu seiner Förderrichtung. Da die Beschleunigung eines Stückgutteils unabhängig von seiner Plazierung relativ zur Mittellinie des Aufgabeförderers stets in gleicher Weise erfolgt, hat dieses zur Folge, daß ein Stückgutteil, welches - in Förderrichtung gesehen - weiter rechts an der Startlinie des Aufgabeförderers angeordnet ist, den Aufnahmeförderer an einem anderen Längenabschnitt erreicht als ein weiter links an der Startlinie angeordnetes Stückgutteil. Im letztgenannten Falle ist nämlich ersichtlich das vorderste Ende des auf den Aufnahmeförderer übergebenen Stückgutteils bei Erreichen seiner Position auf dem Aufnahmeförderer relativ zu der entsprechenden Position eines weiter rechts auf dem Auggabeförderer angeordneten Stückgutteils entgegen der Fröderrichtung des Aufnahmeförderers versetzt und weist mithin im Falle eines Kippschalenförderers od.dgl. einen größeren Abstand zu der Vorderkante der beschickten Förderschale auf als ein weiter rechts auf dem Aufgabeförderer angeordnetes Stücktutteil. Dieses ist im Hinblick auf die Ausnutzung freier Förderplätze und damit die Kapazität der Gesamtanlage ungünstig, wenn ein aufzugebendes Stückgutteil relativ weit zum linken Rand des Aufgabeförderers versetzt angeordnet ist und eine Grenzlänge aufweist, die bei rechtsseitiger Plazierung auf dem Aufgabeförderer an sich noch als Einschalenlänge (bzw. Zweischalenlänge) zu behandeln wäre, die jedoch bei einer verschobenen Plazierung auf dem Aufnahmeförderer entgegen dessen Förderrichtung auf eine Schale (bzw. zwei Schalen) zu groß ist, so daß nach einer entsprechenden Feststellung zugewartet werden muß, bis ein freier Förderplatz mit Zweischalenlänge sich der Übergabestelle nähert bzw. eine Qualifizierung der Stückgutlänge als Überlänge erfolgt, obwohl dieses bei optimaler Plazierung nicht erforderlich wäre.

Um diesen Nachteil zu vermeiden, hat man daher auch bereits die Startlinie der Beschleunigungsstrecke rechtwinklig zur Förderrichtung des Aufnahmeförderers (und damit in einem spitzen Winkel zur Förderrichtung des Aufgabeförderers) angeordnet und demgemäß auch die parallel zur Startlinie verlaufenden Meßlinien der Meßstrecke im rechten Winkel zur Förderrichtung des Aufnahmeförderers verlaufen lassen. Eine solche Ausbildung führt zwar dazu, daß ein auf den Aufnahmeförderer übergebenes Stückgutteil auf diesem stets so plaziert wird, daß sein vorderes Ende unabhängig von seiner relativen Seitenlage zur Mittellinie des Aufgabeförderers stets auf einer rechtwinklig zur Förderrichtung des Aufnahmeförderers verlaufenden LInie liegt (die im Falle eines Kippschalenförderers dann zweckmäßigerweise unmittelbar benachbart zur Vorderkante der zu beschickenden Förderschale verläuft), doch weist dieser bekannte Aufgabeförderer den großen Nachteil auf, daß sich seine Meßstrecke aufgrund der spitzwinklig zur Förderrichtung des Aufgabeförderers verlaufenden Meßlinie über einen großen Abschnitt der Förderstrecke des Aufgabeförderers erstreckt. Das hat nun aber bei sonst gleichen Verhältnissen zwangsläufig eine entsprechend geringe Durchsatzleistung des Aufgabeförderers zur Folge, da ein weiteres Stückgutteil erst dann in die Meßstrecke einlaufen kann, wenn das vorhergehende Stückgutteil übergeben worden ist und bei dem bei dieser bekannten Ausführung erforderlichen relativ großen Stückgutabstand mithin bei gleicher Fördergeschwindigkeit nur eine entsprechend verminderte Durchsatzleistung realisierbar ist.

Um einen derartigen Aufgabeförderer mit möglichst kurzer erforderlicher Länge zu schaffen, mit dem bei großer Durchsatzleistung zugleich sicherzustellen ist, daß das vordere Ende eines auf den Aufnahmeförderer aufzugebenden Stückgutteils unabhängig von dessen seitlicher Relativlage zur Mittellinie des Aufgabeförderers stets im wesentlichen auf einer rechtwinklig zur Förderrichtung des Aufgabeförderers verlaufenden, vorgegebenen Linie liegt, ist mit dem gattungsgemäßen Aufgabeförderer gemäß der deutschen Patentanemldung P 37 29 081.9-22 bereits vorgeschlagen worden, die Meßstrecke durch insgesamt lediglich zwei Meßlinien auszubilden, die in einem spitzen Winkel zueinander verlaufen. Eine aus lediglich zwei Meßlinien gebildete Meßstrecke reicht nämlich überraschenderweise zur Erfüllung der ihr zugewiesenen Funktionen (Positionieren des jeweiligen Stückgutteils an der Startlinie; Bestimmen der jeweiligen Stückgutlänge) aus, wobei durch die V-förmige Meßlinienanordnung eine (in Förderrichtung des Aufgabeförderers gemessene) extrem kurze Längserstreckung der Meßstrecke zu erzielen und eine entsprechend enge Stückgutfolge zu realisieren ist, was bei gleichen Geschwindigkeitsverhältnissen zu einer entsprechend höheren Durchsatzleistung als bei einer Ausbildung mit zueinander parallelen, rechtwinklig zur Förderrichtung des Aufnahmeförderers verlaufenden Meßlinien führt, von denen bei vorher bekannten gattungsgemäßen Aufgabeförderern drei mit gegenseitigem Abstand angeordnete, parallele Meßlinien vorhanden waren, die mithin zu einer relativ langen Meßstrecke geführt haben.

Dieser aus der deutschen Patentanmeldung P 37 29 081.9-22 bekannte Aufgabeförderer hat sich in der Praxis an sich bestens bewährt, wobei sich im praktischen Einsatz herausgestellt hat, daß er - bzgl. seiner Zuverlässigkeit bzw. Anwendungsmöglichkeit bei beliebigem Stückgut - dann nicht oder nur ungenau funktioniert, wenn es sich bei dem zu handhabenden Stückgut um extrem flaches Stückgut (wie bspw. Briefe od.dgl.) handelt, oder aber um Stückgut, welches an seiner Unterseite ballig o.ä. ausgebildet ist. Denn die Lichtschranke(n) des aus der deutschen Patentanmeldung P 37 29 081.9-22 bekannten Aufgabeförderers muß selbstverständlich aus rein praktischen Gründen mit einem gewissen Abstand über der Förderebene des Aufgabeförderers angeordnet werden (dieses ist schon deshalb erforderlich, um bei einem gewissen Flattern des Förderbandes des Aufgabeförderers nicht auch bei Leerbetrieb an der betreffenden Lichtschranke Signale auszulösen). Dieses hat aber dann zur Folge, daß Stückgut, dessen Höhe kleiner ist als der Abstand zwischen Lichtschranke und Förderebene unter der Lichtschranke durchläuft, ohne diese zu bedämpfen.

Entsprechendes gilt sinngemäß für Stückgut, welches mit einer balligen Unterseite auf dem Aufgabeförderer aufliegt. Denn derjenige Bereich eines solchen Stückgutteils, dessen Abstand aufgrund der Balligkeit größer ist als der Abstand zwischen Lichtschranke und Förderebene, kann die betreffende Lichtschranke ersichtlich (noch) nicht bedämpfen, obwohl die Vorderkante bzw. das vordere Ende des Stückgutteils die betreffende Meßlinie bereits erreicht und überschritten hat. Vielmehr erfolgt in einem solchen Falle eine Bedämpfung erst dann, wenn derjenige, weiter hinten liegende Abschnitt des betreffenden Stückgutteils die betreffende Lichtschranke erreicht, der in der Höhe der Lichtschranke über der Förderebene liegt.

Der vorliegenden Erfindung liegt demgemäß die Aufgabe zugrunde, die bekannten Aufgabeförderer (insbesondere den Aufgabeförderer gemäß der deutschen Patentanmeldung P 37 29 081.9-22) unter Vermeidung ihrer Nachteile insbesondere dahingehend zu verbessern, daß auch extrem flaches oder an seiner Unterseite balliges Stückgut sicher und zuverlässig so zu handhaben ist, wie dieses i.ü. schon mit dem Aufgabeförderer nach der deutschen Patentanmeldung P 37 29 081.9-22 möglich ist.

Die Lösung dieser Aufgabe erfolgt erfindungsgemäß dadurch, daß am Anfang der Meßstrecke mehrere, eine quer zur Förderrichtung des Aufgabeförderers verlaufende Meßstrecken-Anfangslinie bildende Lichttaster od.dgl. vorhanden sind, deren einzelne Lichtstrahlen eine rechtwinklig zur Förderebene des Aufgabeförderers gerichtete Komponente aufweisen, wobei bevorzugt vorgesehen ist, daß die Lichtstrahlen der Lichttaster od.dgl. im wesentlichen senkrecht zur Förderebene des Aufgabeförderers gerichtet sind.

Obwohl ersichtlich auch andere Möglichkeiten zur Realisierung der vorliegenden Erfindung denkbar sind, wird die aus mehreren einzelnen Lichttastern od.dgl. bestehende Meßstrecken-Anfangslinie bevorzugt zwischen zwei Einheiten des Aufgabeförderers angeordnet, und zwar sinnvollerweise zwischen der die Beschleunigungsstrecke aufweisenden Fördereinheit des Aufgabeförderers (dem i.a. zweckmäßigerweise ein sog. "Dreieckförderer" nachgeordnet ist, von dem die Stückgutteile jeweils unmittelbar auf den Aufnahmeförderer übergeben werden) und einem der Beschleunigungseinheit des Aufgabeförderers (unmittelbar) vorgeordneten Einheit des Aufgabeförderers.

Weitere bevorzugte Ausgestaltungen der vorliegenden Erfindung sind in den Unteransprüchen beschrieben.

Die Erfindung ist nachstehend unter Bezugnahme auf eine schematische Zeichnung an einem Ausführungsbeispiel weiter erläutert.

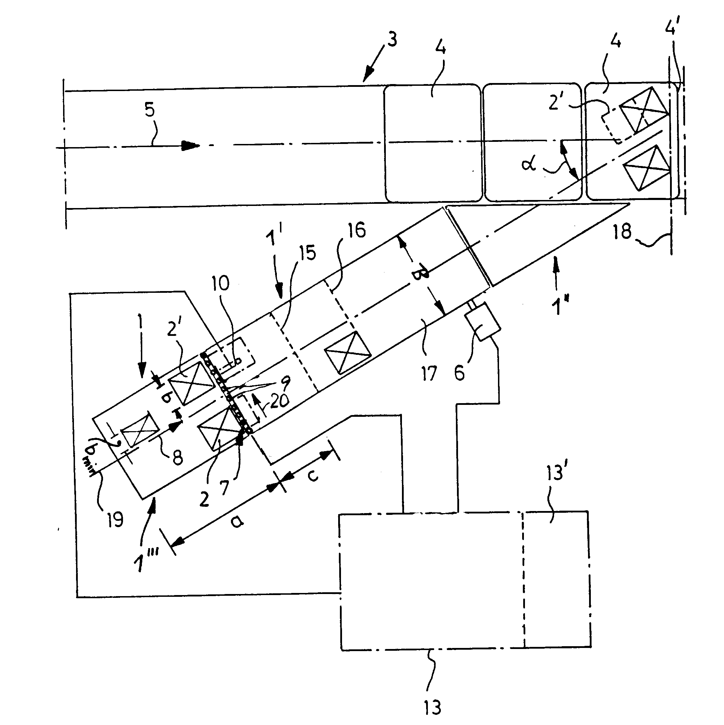

Die Zeichnung zeigt in einer schematischen Darstellung eine Draufsicht auf einen im ganzen mit 1 bezeichneten Aufgabeförderer zum jeweils einzelnen Aufgeben von Stückgutteilen 2 auf einen freien Förderplatz eines Aufnahmeförderers 3, der als sog. Sorter eingesetzt ist, um ein Stückgutteil 2 jeweils an einer vorgegebenen Abgabestelle abzugeben. Zu diesem Zweck ist der Aufnahmeförderer 3 als Kippschalenförderer ausgebildet, dessen Förderschale 4 (von denen in der Zeichnung lediglich drei Förderschalen 4 angeordnet sind) jeweils seitlich zur Förderrichtung 5 des Aufnahmeförderers 3 kippbar sind.

Der Aufgabeförderer 1 ist unter einem spitzen Einschleuswinkel $\alpha$ zum Aufnahmeförderer 3 derart angeordnet, daß die Förderebene in derselben Horizontalebene verläuft wie die Tragflächen der Förderschalen des Aufnahmeförderers 3. Der Aufgabeförderer 1 besteht aus drei Einheiten, die jeweils als Gurtförderer ausgebildet sind, nämlich (gleichsam als "Kernstück") einem in der Praxis auch kurz als "Beschleunigungsband" bezeichneten Gurtförderer 1', der mittels eines steuer-bzw. regelbaren Antriebes 6 anzutreiben ist, einem zwischen dem Beschleunigungsband 1' und dem Aufnahmeförderer 3 angeordneten, in der Praxis auch kurz als "Dreiecksband" bezeichneten Bandförderer 1'', und einem dem Beschleunigungsband 1' entgegen seiner Förderrichtung 8 vorgeordneten Bandförderer 1'''.

Mit einem Abstand a zum aufgabeseitigen Ende des Aufgabeförderers 1 (also dem Aufgabeende des Bandförderers 1''') ist zwischen dem Bandförderer 1''' und dem ihm unmittelbar nachgeordneten Beschleunigungsband 1' eine sich quer zur Mittellinie 19 des Aufgabeförderers 1 erstreckende Meßlinie 7 vorhanden, welche die Anfangslinie einer Meßstrecke bildet und aus mehreren Lichttastern 9 besteht, deren Lichtstrahlen senkrecht zur Förderebene des Aufgabeförderers 1 verlaufen, wobei die Anzahl n der Lichttaster 9 (wenigstens) gleich dem Quotienten aus der Differenz zwischen der Breite B des Aufgabeförderers 1 und der minimalen Stückgutbreite $b_{min}$ geteilt durch die minimale Stückgutbreite $B_{min}$ ist.

Ist mit dem Aufgabeförderer 1 eine Betriebsweise vorgesehen, bei welcher sichergestellt ist, daß jeweils nur ein einziges Stückgutteil auf dem Aufgabeförderer 1 liegt, so reicht diese aus den Lichttastern 9 bestehende Meßeinrichtung (selbstverständlich ergänzt durch entsprechende, ggf. auch integrierte Empfänger und nachgeordnete Teile der insgesamt mit 13 bezeichneten Steuereinrichtung) für eine wie vorgesehene Funktionsweise aus, wie sie nachstehend noch erläutert ist. Es sei jedoch bereits an dieser Stelle darauf verwiesen, daß für eine Betriebsweise, bei welcher mehr als jeweils nur ein Stückgutteil hintereinander auf dem Aufgabeförderer 1 liegen können/dürfen, das Beschleunigungsband 1' des Aufgabeförderers 1 mit einem bei dem Ausführungsbeispiel als Rotationsimpulsgeber ausgebildeten, inkrementalen Impulsgeber 10 versehen ist, mit dem bei Aufgabebetrieb inkrementale Wegstreckenabschnitte zu zählen sind, wie dieses weiter unten ebenfalls noch im einzelnen erläutert werden wird.

Bevor dieses geschieht, sei noch darauf verwiesen, daß die u.a. ein speicherprogrammierbares Steuerteil enthaltende Steuereinrichtung 13 u.a. ein in der Zeichnung nicht im einzelnen dargestelltes Schieberegister aufweist, dessen serieller Eingang mit dem ersten Bedämpfen eines Lichttasters 9 der Meßstrecken-Anfangslinie 7 zu setzen und von einem durch einen ebenfalls nicht dargestellten Zeittaktgeber erzeugten Zeittakt oder - bei einer Betriebsweise, bei welcher mehr als jeweils nur ein Stückgutteil hintereinander auf dem Aufgabeförderer 3 liegen dürften - von dem bereits erwähnten inkrementalen Impulsgeber weiterzugestalten ist.

Dabei ist die Anordnung so getroffen, daß nach der vorgegebenen Anzahl N von der gewünschten Wegstrecke c der bis zu einer Stopplinie 15 entsprechenden Takten die Parallele N-te Stelle des Schieberegisters selbsttätig gesetzt wird und zyklisch abzufragen ist, wobei der Stopp selbsttätig einzuleiten ist, sobald das Bit gesetzt ist.

Weiterhin sei bereits an dieser Stelle darauf verwiesen, daß die Stopplinie 15 durch entsprechende Wahl der abgefragten Stelle des Schieberegisters ggf. zu verschieben ist (Funktion einer imaginären Lichtschranke).

Schließlich sei noch darauf verwiesen, daß die einzelnen Lichttaster 9 der Meßstreckenanfangslinie 7 bzgl. des zwischen dem Aufnahmeförderer 3 und dem Aufgabeförderer 1 eingeschlossenen spitzen Winkels $\alpha$ gemäß dem Pfeil 20 von außen nach innen abzufragen sind, damit bei gleichzeitiger Bedämpfung mehrerer Lichttaster 9 stets der (von mehreren bedämpften Lichttastern 9) außenliegende bedämpfte Lichttaster 9 zu einer Lagekompensation benutzt wird, die darin besteht, daß jedem Lichttaster 9 eine definierte Startverzögerungszeit zugeordnet wird, um die - wie schon mit dem Gegenstand der deutschen Patentanmeldung P 37 29 081.9-22 - angestrebte seitliche Relativlage eines auf dem Aufgabeförderer 1 befindlichen Stückgutteils 2 bei der Einschleusung auf den Aufnahmeförderer 3 zu kompensieren und letztlich zu erreichen, daß jedes Stückgutteil 2 nach Aufgabe auf den Aufnahmeförderer 3 mit seinem vordersten Ende so auf diesem - bei dem dargestellten Ausführungsbeispiel also einer Förderschale 4 - liegt, daß das vorderste Ende des betreffenden Stückgutteils zwar auf/an einer gedachten Linie 18 liegt, wie dieses hinsichtlich des Sinn und Zweckes der deutschen Patentanmeldung P 37 29 081.9-22 eingehend erläutert wird, worauf hier ausdrücklich verwiesen wird.

Die Arbeitsweise des erfindungsgemäßen Aufgabeförderers ist im wesentlichen wie folgt:
Erreicht ein auf den Aufgabeförderer 1 (zwecks definierter Einschleusung auf den Aufnahmeförderer 3) aufgegebenes Stückgutteil 2 nach Überwinden der Förderstrecke a des Bandförderers 1''' die Meßstrecken-Anfangslinie 7, erfolgt also das erste Bedämpfen eines Lichttasters 9, so wird in der bereits erwähnten speicherprogrammierbaren Steuerung 13' der Steuereinrichtung 13 (lediglich) das Schieberegister gesetzt und von einem durch einen Zeittaktgeber erzeugten Zeittakt weitergeschaltet bzw. -getaktet, wenn es sich um eine Betriebsweise handelt, bei welcher stets nur ein Stückgutteil 2 auf dem Aufgabeförderer 2 liegen darf.

Nach n-Takten, die der gewünschten Wegstrecke bis zur Stopplinie 15 entsprechen, ist die parallele n-te Stelle des Schieberegisters gesetzt. Sobald das Bit gesetzt ist, wird der Stopp eingeleitet.

Hierbei ist es erforderlich, die Meßstrecken-Anfangslinie 7 bildenden Lichttaster 9 relativ schnell abzutasten, damit die Steuereinrichtung 13 erkennt, welcher Lichttaster 9 als erster bedämpft worden ist, da dessen Position mit der Position des voreilenden Endes (Ecke oder Kante) des betreffenden Stückgutteils 2 übereinstimmt.

Jedem Lichttaster 9 wird eine definierte Startverzögerungszeit zugeordnet, um die seitliche Lage des jeweiligen Stückgutteils 2 bei der Einschleusung des Stückgutteils 2 auf den Aufnahmeförderer 5 zu kompensieren, wie dieses oben bereits dargelegt und i.ü. in der deutschen Patentanmeldung P 37 29 081.9-22 ausführlich beschrieben worden ist.

Dabei ist es, wie dieses bereits ausgeführt worden ist, von entscheidender Bedeutung, daß die Richtung des Abtastens der Lichttaster 9 von außen nach innen (in Richtung auf den Aufnahmeförderer 5) erfolgt, damit bei gleichzeitiger Bedämpfung mehrerer Lichttaster 9 stets der äußere (bzw. äußerste) bedämpfte Lichttaster zur Lagekompensation benutzt wird.

Handelt es sich dagegen um eine Betriebsweise, bei welcher mehr als jeweils nur ein Stückgutteil hintereinander auf dem Aufgabeförderer 3 liegen dürfen, so wird das Schieberegister nach dem ersten Bedämpfen eines Lichttasters 9 von dem bereits erwähnten inkrementalen Impulsgeber 19 weitergeschaltet bzw. -getaktet, da eine entsprechende Weg-Information gewonnen werden muß, weil nämlich das nachfolgende zweite Stückgutteil bereits die Meßstrecken-Anfangslinie 7 durchsetzen kann, während das voreilende Stückgutteil 2 zur Stopplinie 15 verbracht wird, weil das voreilende Stückgutteil 2 das Beschleunigungsband 1' stoppt, so daß aufgrund von Zeittakten keine geeignete Information für das nacheilende Stückgutteil 2 zu erhalten ist, die bewirken bzw. sicherstellen würde, daß das nacheilende Stückgutteil 2 letztlich an der Stopplinie 15 zum Halten kommt.

Es ist für den einschlägigen Fachmann ohne weiteres erkennbar, daß mit dem erfindungsgemäßen Aufgabeförderer auch extrem flache Stückgutteile (wie bspw. Briefe) oder aber Stückgutteil mit balliger Unterseite ohne weiteres genau erfaßt werden und verarbeitet werden können, da die Lichttaster 9 der Meßstrecke-Anfangslinie 7 im wesentlichen vertikal nach oben gerichtete (Meß-)Strahlen aufweisen und demgemäß das voreilende Ende des betreffenden Stückgutteils 2 in jedem Falle sicher erfassen bzw. erkennen, ganz gleich, ob dieses dünn oder dick ist und/oder ob dieses eine ballige Unterseite aufweist oder nicht.

Abgesehen von den oben beschriebenen Besonderheiten, erfolgt die Arbeitsweise des erfindungsgemäßen Aufgabeförderers 1 grundsätzlich in gleicher Weise wie bei dem Aufgabeförderer gemäß der deutschen Patentanmeldung P 37 29 081.9-22.

In der vorstehenden Beschreibung ist ebenso wie in den Ansprüchen davon die Rede, daß die Meßstrecken-Anfangslinie 7 durch Lichttaster 9 "od.dgl." gebildet werden soll. Hiermit soll zum Ausdruck gebracht werden, daß die gleichsam punktuellen Signalgeber, welche die Meßstrecken-Anfangslinie 7 bilden, nicht notwendigerweise Lichtsschranken im engeren Sinne dieses Begriffes sein brauchen, sondern (bspw. auch andere Wellen-Aussender sein können, welche von unterhalb der Förderebene Wellen aussenden, die wenigstens eine sich in Richtung nach oben erstreckende, vertikale Komponente aufweisen. Im Hinblick auf den Umstand, daß der wesentliche Erfindungsgedanke insoweit darin liegt, die Meßstrecken-Anfangslinie 7 durch gleichsam punktuelle Geber (= Lichtschranken od.dgl.) zu realisieren, könnten diese ersichtlich bspw. auch als Drucktaster od.dgl. ausgebildet sein, doch ist bei einer derartigen Ausbildung ggf. (bspw. bei relativ leichten Briefen od.dgl.) die Ansprechgrenze ggf. problematisch, so daß berührungslose Geber regelmäßig zweckmäßiger sein dürften.

**Patentansprüche**

1. Aufgabeförderer (1) zum jeweils einzelnen Aufgeben von Stückgutteilen auf einen freien Förderplatz eines Aufnahmeförderers (3), insbesondere eines als Kippschalenförderer o.dgl. ausgebildeten sog. Sorters, dessen Förderrichtung unter einem spitzen Einschleuswinkel (α) zur Förderrichtung des Aufgabeförderers verläuft, mit einer am abgabeseitigen Endabschnitt des Aufgabeförderers vorhandenen Beschleunigungsstrecke (1'), längs welcher ein an einer den Anfang der Beschleunigungsstrecke bildenden Startlinie befindliches Stückgutteil jeweils auf eine vorgegebene Übergabegeschwindigkeit zu beschleunigen ist, wenn ein vom Aufnahmeförderer bzw. dessen Steuereinrichtung (13) zu betätigender Startimpulsgeber bei Annäherung eines freien Förderplatzes des Aufnahmeförderers an die Übergabestelle einen Startimpuls für den Antritt des Aufgabeförderers ausgelöst hat, und mit einer der Bescheunigungsstrecke in Förderrichtung vorgeordneten Meßstrecke zum Positionieren des jeweiligen Stückgutteils an der Startlinie, wobei die sich quer über die Förderbahn des Aufgabeförderers erstreckende Anfangslinie der Meßstrecke unter Verwendung der Lichtschrankentechnologie od.dgl. ausgebildet ist und mit einer einen Rechner aufweisenden Steuereinrichtung verbunden ist, dadurch gekennzeichnet, daß am Anfang der Meßstrecke mehrere eine quer zur Förderrichtung (8) des Aufgabeförderers (1) verlaufende Meßstrecken-Anfangslinie (7) bildende Lichttaster (9) od.dgl. vorhanden sind, deren Lichtstrahlen jeweils eine senkrecht zur Förderebene gerichtete Komponente aufweisen.

2. Aufgabeförderer nach Anspruch 1, dadurch gekennzeichnet, daß die Lichtstrahlen der Lichttaster (9) od.dgl. im wesentlichen senkrecht zur Förderebene des Aufgabeförderers (1) verlaufen.

3. Aufgabeförderer nach Anspruch 1 oder 2, dadurch gekennzeichnet, daß die aus mehreren einzelnen Lichttastern (9) od.dgl. bestehende Meßstrecken-Anfangslinie (7) zwischen zwei Einheiten (1', 1''') des Aufgabeförderers (1) angeordnet ist.

4. Aufgabeförderer nach Anspruch 3, dadurch gekennzeichnet, daß die Lichttaster (9) unterhalb der Förderebene angeordnet sind.

5. Aufgabeförderer nach Anspruch 3 oder 4, dadurch gekennzeichnet, daß die Meßstrecken-Anfangslinie (7) - in Förderrichtung (8) des Aufgabeförderers (1) gesehen - vor der zu steuernden Einheit (1') des Aufgabeförderers (1) angeordnet ist.

6. Aufgabeförderer nach einem oder mehreren der vorhergehenden Ansprüche, dadurch gekennzeichnet, daß die Anzahl (n) der Lichttaster (9) od.dgl. gleich der Differenz zwischen der Breite (B) des Aufgabeförderers (1) und der minimalen Stückgutbreite ($b_{min}$), geteilt durch die minimale Stückgutbreite ($b_{min}$) ist.

7. Aufgabeförderer nach einem oder mehreren der vorhergehenden Ansprüche für eine Betriebsweise, bei welcher mehr als jeweils nur ein Stückgutteil hintereinander auf dem Aufgabeförderer liegen dürfen, dadurch gekennzeichnet, daß die zu steuernde Einheit ($1'$) des Aufgabeförderers (1) mit einem inkrementalen Impulsgeber (10) versehen ist, mit dem bei Förderbetrieb der zu steuernden Einheit ($1'$) des Aufgabeförderers (1) inkrementale Wegstreckenabschnitte zu zählen sind.

8. Aufgabeförderer nach einem oder mehreren der vorhergehenden Ansprüche, dadurch gekennzeichnet, daß die eine speicherprogrammierte Steuereinheit ($13'$) enthaltende Steuereinrichtung (13) ein Schieberegister od.dgl. aufweist, dessen serieller Eingang mit dem ersten Bedämpfen eines Lichttasters (9) der Meßstrecken-Anfangslinie (9) zu setzen ist und von einem durch einen Zeittaktgeber erzeugten Zeittakt oder von einem inkrementalen Impulsgeber (10) (s. Anspruch 7) weiterzuschalten bzw. zu takten ist.

9. Aufgabeförderer nach Anspruch 8, dadurch gekennzeichnet, daß nach der Anzeige (N) von der gewünschten Wegstrecke (c) bis zur Stopplinie (15) entsprechenden Takten die Parallele N-te Stelle des Schieberegisters od.dgl. selbsttätig zu setzen und zyklisch selbsttätig abzufragen ist, wobei der Stopp selbsttätig einzuleiten ist, sobald das Bit gesetzt ist.

10. Aufgabeförderer nach Anspruch 8 oder 9, dadurch gekennzeichnet, daß die Stopplinie (15) durch Wahl der abgefragten Stelle des Schieberegisters od.dgl. zu verschieben ist.

11. Aufgabeförderer nach einem oder mehreren der vorhergehenden Ansprüche, dadurch gekennzeichnet, daß die einzelnen Lichttaster (9) od.dgl. der Meßstrecken-Anfangslinie (7) bzgl. des zwischen dem Aufnahmeförderer (3) und dem Aufgabeförderer (1) eingeschlossenen Winkels ($\alpha$) von außen nach innen (Pfeil 20) abzufragen sind.

**Claims**

1. A feed conveyor (1) for feeding individual piece goods on to a free conveyor space on a receiving conveyor (3), more particularly a "sorter" in the form of a tilting pan conveyor or the like, of which the direction of advance forms an acute angle of admittance ($\alpha$) to the direction of advance of the feed conveyor, having an acceleration zone (1') which is at the delivery end of the feed conveyor and along which respective piece goods items situated at a starting line forming the beginning of the acceleration zone are to be accelerated to a predetermined transfer speed when a starting pulse emitter to be operated by the receiving conveyor or its control device (13), when a free conveyor space on the receiving conveyor approaches the transfer point, has emitted a starting pulse to start the feed conveyor, and having upstream of the acceleration zone a measuring zone for positioning the respective piece goods item at the starting line, the measuring-zone starting line, which extends transversely over the conveying path of the feed conveyor, being constructed using light barrier technology or the like and being connected to a control device having a computer, characterised in that at the beginning of the measuring zone there is a plurality of light scanners (9) or the like forming a measuring-zone starting line (7) transverse relative to the direction (8) of advance of the feed conveyor (1), and the light beams from the scanners respectively have a component perpendicular to the conveying plane.

2. A feed conveyor as claimed in claim 1, characterised in that the light beams from the light scanners (9) or the like are substantially perpendicular to the conveying plane of the feed conveyor (1).

3. A feed conveyor as claimed in claim 1 or 2, characterised in that the measuring-zone starting line (7) comprising a plurality of individual light scanners (9) or the like is situated between two units (1', 1''') of the feed conveyor (1).

4. A feed conveyor as claimed in claim 3, characterised in that the light sensors (9) are situated below the conveying plane.

5. A feed conveyor as claimed in claim 3 or 4, characterised in that the measuring-zone starting line (7) - as seen in the direction (8) of advance of the feed conveyor (1) - is upstream of the feed conveyor unit (1') to be controlled.

6. A feed conveyor as claimed in one or more of the preceding claims, characterised in that the number (n) of light scanners (9) or the like is equal to the difference between the breadth (B) of the feed conveyor (1) and the minimum piece goods breadth ($b_{min}$), divided by the minimum piece goods breadth ($b_{min}$).

7. A feed conveyor as claimed in one or more of the preceding claims, for a mode of operation in which more than one piece goods item at a time may lie consecutively on the feed conveyor, characterised in that the feed conveyor unit (1') to be controlled is provided with an incremental pulse emitter (10) by means of which, when the feed conveyor unit (1') to be controlled is conveying, incremental distances are to be counted.

8. A feed conveyor as claimed in one or more of the preceding claims, characterised in that the control device (13), which comprises a memory-programmed control unit (13'), has a shift register or the like of which the serial input can be set with the first occlusion of a light scanner (9) at the measuring-zone starting line (9) end can be advanced by a timing pulse from a clock or by an incremental pulse emitter (10) (see claim 7).

9. A feed conveyor as claimed in claim 8, characterised in that after pulses corresponding to the display (sic: number) (N) of the desired distance (c) to the stop line (15), the parallel N-th place in the shift register or the like is to be automatically set and automatically cyclically interrogated, the stop being initiated automatically as soon as the bit has been set.

10. A feed conveyor as claimed in claim 8 or 9, characterised in that the stop line (15) can be shifted by selection of the interrogated place in the shift register or the like.

11. A feed conveyor as claimed in one or more of the preceding claims, characterised in that the individual light scanners (9) or the like at the measuring-zone starting line (7) are to be interrogated from the outside inwards (arrow 20) relative to the angle ($\alpha$) enclosed between the receiving conveyor (3) and the feed conveyor (1).

**Revendications**

1. Transporteur d'alimentation (1) destiné à délivrer individuellement des charges individuelles de marchandise de détail à un emplacement de transport libre d'un transporteur de réception (3), notamment un transporteur de tri réalisé sous la forme d'un transporteur à bacs basculants ou analogue, dont la direction de transport forme avec la direction de transport du transporteur d'alimentation, un angle d'insertion ($\alpha$) aigu, comprenant, au niveau du tronçon d'extrémité du transporteur d'alimentation, situé côté évacuation, un parcours d'accélération (1') le long duquel une charge individuelle de marchandise de détail se trouvant au niveau d'une ligne de départ constituant le début du parcours d'accélération, doit être accélérée à une vitesse de transfert prédéfinie, lorsqu'un générateur d'impulsions de départ du transporteur de réception ou de son dispositif de commande (13) a délivré une impulsion de départ pour le démarrage du transporteur d'alimentation, lorsqu'un emplacement de transport libre du transporteur de réception approche de la zone de transfert, l'ensemble comprenant également un parcours de mesure, situé en amont du parcours d'accélération, en se référant à la direction du transport, et destiné à positionner la charge individuelle de marchandise de détail sur la ligne de départ, cette ligne de départ du parcours de mesure, qui s'étend transversalement sur la voie de transport du transporteur d'alimentation, étant réalisée au moyen de la technologie des barrières photoélectriques ou analogues et reliée à un dispositif de commande comportant un calculateur, caractérisé en ce qu'au début du parcours de mesure sont disposés plusieurs palpeurs optiques (9) ou analogues, qui forment une ligne de départ de parcours de mesure (7) s'étendant transversalement à la direction de transport (8) du transporteur d'alimentation (1), et dont les rayons lumineux de chacun présentent une composante orientée perpendiculairement au plan de transport.

2. Transporteur d'alimentation selon la revendication 1, caractérisé en ce que les rayons lumineux des palpeurs optiques (9) ou analogues, s'étendent essentiellement de manière perpendiculaire au plan de transport du transporteur d'alimentation (1).

3. Transporteur d'alimentation selon la revendication 1 ou 2, caractérisé en ce que la ligne de départ de parcours de mesure (7) formée par plusieurs palpeurs optiques individuels (9) ou analogues, est disposée entre deux unités (1', 1''') du transporteur d'alimentation (1).

4. Transporteur d'alimentation selon la revendication 3, caractérisé en ce que les palpeurs optiques (9) sont disposés sous le plan de transport.

5. Transporteur d'alimentation selon la revendication 3 ou 4, caractérisé en ce que la ligne de départ de parcours de mesure (7) est disposée devant l'unité (1') à commander, du transporteur d'alimentation (1), en se référant à la direction de transport (8) du transporteur d'alimentation (1).

6. Transporteur d'alimentation selon l'une ou plusieurs des revendications précédentes, caractérisé en ce que le nombre (n) des palpeurs optiques (9) ou analogues, est égal à la différence entre la largeur (B) du transporteur d'alimentation (1) et la largeur minimale ($b_{min}$) de la marchandise de détail, divisée par la largeur minimale ($b_{min}$) de la marchandise de détail.

7. Transporteur d'alimentation selon l'une ou plusieurs des revendications précédentes, destiné à un mode de fonctionnement selon lequel il est possible que plus d'une charge individuelle de marchandise de détail à la fois peuvent se succéder sur le transporteur d'alimentation, caractérisé en ce que l'unité (1') à commander, du transporteur d'alimentation (1), est équipée d'un générateur d'impulsions (10) incrémental, à l'aide duquel doivent être comptés des tronçons de parcours de déplacements incrémentaux, lors du fonctionnement en mode transport de l'unité (1') à commander, du transporteur d'alimentation (1).

8. Transporteur d'alimentation selon l'une ou plusieurs des revendications précédentes, caractérisé en ce que le dispositif de commande (13) comprenant une unité de commande (13') à mémoire programmable, comporte un registre à décalage ou analogue, dont l'entrée série est initialisée lors du premier assombrissement d'un palpeur optique (9) de la ligne de départ de parcours de mesure (7), et qui doit être incrémentée d'une durée de temps cyclique engendrée par une horloge, ou doit être incrémentée par le générateur d'impulsions (10) incrémental (voir revendication 7).

9. Transporteur d'alimentation selon la revendication 8, caractérisé en ce qu'après l'indication (N) de l'incrémentation correspondant au parcours de déplacement (c) souhaité jusqu'à la ligne d'arrêt (15), la N-ième position parallèle du registre à décalage ou analogue doit être automatiquement initialisée et balayée cycliquement, l'arrêt devant être déclenché automatiquement dès que le bit est initialisé.

10. Transporteur d'alimentation selon la revendication 8 ou 9, caractérisé en ce que la ligne d'arrêt (15) doit être décalée par sélection de la position balayée du registre à décalage ou analogue.

11. Transporteur d'alimentation selon l'une ou plusieurs des revendications précédentes, caractérisé en ce que les palpeurs optiques individuels (9) ou analogues de la ligne de départ de parcours de mesure (7) doivent être balayés de l'extérieur vers l'intérieur (flèche 20) en se référant à l'angle ($\alpha$) que forment entre-eux le transporteur de réception (3) et le transporteur d'alimentation (1).